# EUROPÄISCHE PATENTSCHRIFT

(11) **EP 2 710 809 B1**
(45) Veröffentlichungstag und Bekanntmachung des Hinweises auf die Patenterteilung: **08.08.2018**
(21) Anmeldenummer: 12719255.7
(22) Anmeldetag: 28.03.2012
(51) Int. Cl.: H04Q 1/14

(54) **VERTEILERLEISTE UND VERTEILERBLOCK MIT MINDESTENS ZWEI VERTEILERLEISTEN**
DISTRIBUTOR UNIT AND A DISTRIBUTOR BLOCK WHICH COMPRISES AT LEAST TWO DISTRIBUTOR UNITS
BARRETTE DE RÉPARTITEUR ET BLOC RÉPARTITEUR COMPORTANT AU MOINS DEUX BARRETTES DE RÉPARTITEUR

(30) Priorität: 17.05.2011 DE 102011101729
(43) Veröffentlichungstag der Anmeldung: 26.03.2014
(73) Patentinhaber: CommScope Technologies LLC, Hickory, NC 28602 (US)
(72) Erfinder: BUSSE, Ralf-Dieter, 15366 Hoppegarten (DE); NEUMETZLER, Heiko, 12623 Berlin (DE); STARK, Joachim, 13595 Berlin (DE); MEYER, Philipp, 10969 Berlin (DE)
(74) Vertreter: Zucker, Volker
(86) Internationale Anmeldenummer: PCT/EP2012/001343
(87) Internationale Veröffentlichungsnummer: WO 2012/156005

(56) Entgegenhaltungen:
- EP-A2- 0 200 883
- WO-A1-2010/043356
- DE-C1- 19 537 529

## Beschreibung

Die Erfindung betrifft eine Verteilerleiste sowie einen Verteilerblock mit mindestens zwei Verteilerleisten, die an einem Trägersystem befestigt sind.

Aus der DE 100 29 649 A1 ist ein Verteileranschlussmodul bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem Funktionselemente zwischen den Eingangs- und Ausgangskontakten angeordnet sind. Die Funktionselemente sind dabei auf mindestens einer Leiterplatte angeordnet, die in dem Gehäuse abgestützt ist. Die Eingangs- und Ausgangskontakte sind dabei beispielsweise als Aderanschlusskontakte in Form von Schneid-Klemm-Kontakten ausgebildet, wobei die Eingangs- und Ausgangskontakte vorzugsweise an gegenüberliegenden Stirnseiten des Gehäuses angeordnet sind. Weiter wird vorgeschlagen, dass zwischen einem Eingangs- und Ausgangskontakt jeweils ein Trennkontakt angeordnet ist, der von außen zugänglich ist.

Aus der EP 0 329 917 A1 ist ein Werkzeug zum Anschließen von Kabeladern an Schneid-Klemm-Kontakte, mittels denen auch die Schneid-Klemm-Kontakte der DE 100 29 649 A1 beschaltbar sind. Aufgrund der Größe des Stößelkopfs des Werkzeugs ist dabei ein Mindestabstand zwischen untereinander angeordneten Schneid-Klemm-Kontakten notwendig.

Aus der DE 195 37 529 C1 ist eine Verteilerleiste für die Telekommunikations- und Datentechnik bekannt, umfassend ein Gehäuse und Anschlusskontakte für Adern, wobei die Verteilerleiste eine Vorderseite und eine Rückseite aufweist. Die Anschlusskontakte sind dabei sowohl von der Vorderseite als auch von der Rückseite zugänglich, wobei die Anschlusskontakte der Vorderseite mit den Anschlusskontakten der Rückseite elektrisch verbunden sind, wobei mindestens die Anschlusskontakte der Vorderseite als Aderanschlusskontakte ausgebildet sind.

Aus der EP 0 200 883 A2 ist eine Kabelabschlusseinheit bekannt, mit einer Vielzahl quer zur Längsrichtung eines Trägers sich erstreckender, auf dem Träger aufsetzbarer, parallel zueinander ausgerichteter Anschlussblöcke. Die Anschlussblöcke weisen mehrere Reihen von Kontakten auf, von denen zwei Reihen einen abisolierfreien Leiteranschluss aufweisen. Dabei sind die Kontakte der einen Reihe für ankommende und die Kontakte der anderen Reihe für abgehende Leitungen. Dabei ist eine weitere Kontaktreihe vorgesehen, wobei die Kontaktreihe der ankommenden Kabeladern im Querschnitt durch den Anschlussblock gesehen tiefer angeordnet ist als die Kontaktreihe der abgehenden Leitungen. Weiter ist in den Anschlussblöcken zwischen den unterschiedlich hoch gestalteten Kontaktreihen die Kontaktreihe für Überspannungsableiter vorgesehen, wobei die Überspannungsableiter sich in dem Raum oberhalb der niedrigen Reihe für die Anschlusskontakte im Anschlussblock erstrecken. Das Dokument WO2010/043356, (Truskett Kevin James - Nicholls Brace Lindsay) publiziert am 22-04-2010, offenbart auch eine Verteilerleiste für die Telekommunikations und Datentechnik. Der Erfindung liegt das technische Problem zugrunde, eine Verteilerleiste sowie einen aus solchen Verteilerleisten bestehenden Verteilerblock zu schaffen, der eine hohe Packungsdichte aufweist und gleichzeitig eine einfache Beschaltbarkeit erlaubt.

Die Lösung des technischen Problems ergibt sich durch die Gegenstände mit den Merkmalen der Ansprüche 1 und 10. Weitere vorteilhafte Ausgestaltungen der Erfindung ergeben sich aus den Unteransprüchen. Hierzu umfasst die Verteilerleiste ein Gehäuse und Anschlusskontakte für Adern, wobei die Verteilerleiste eine Vorderseite und eine Rückseite aufweist, wobei Anschlusskontakte sowohl von der Vorderseite als auch von der Rückseite zugänglich sind, wobei die Anschlusskontakte der Vorderseite mit den Anschlusskontakten der Rückseite elektrisch verbunden sind, wobei mindestens die Anschlusskontakte der Vorderseite als Aderanschlusskontakte ausgebildet sind, wobei die Aderanschlusskontakte der Vorderseite seitlich zu einer Seitenfläche des Gehäuses versetzt angeordnet sind und sich maximal bis zur halben Breite der Vorderseite erstrecken. Entsprechend kann dann ein Verteilerblock mit mindestens zwei solchen Verteilerleisten, die untereinander in einem Trägersystem befestigt sind, aufgebaut werden, wobei die Aderanschlusskontakte alternierend links oder rechts angeordnet sind. Dadurch steht beim Beschalten jeweils die doppelte Höhe zur Verfügung, so dass die Aderanschlusskontakte mit herkömmlichen Beschaltwerkzeugen, wie beispielsweise aus der EP 0 329 917 A bekannt, beschaltet werden können. Der seitlich neben den Aderanschlusskontakten verbleibende Platz an der Vorderseite kann bedarfsweise für verschiedene Zwecke genutzt werden, beispielsweise als Beschriftungsfeld, für optische Signalisierungszwecke beispielsweise mit LEDs oder mit weiteren Kontakten für Mess- und/oder Prüfzwecke. Des Weiteren kann dieser freie Platz auch als Kabel- bzw. Aderführung benutzt werden, um von der Rückseite oder der Seite ankommende Adern zur Vorderseite zu führen. Vorzugsweise dient die Verteilerleiste zum Anschalten von acht Doppeladern an der Vorderseite. In einer bevorzugten Ausführungsform ist die Verteilerleiste 130 mm breit und 10 mm hoch, so dass entsprechend die Aderanschlusskontakte maximal eine Breite von 65 mm einnehmen. Die Aderanschlusskontakte der Vorderseite und die Anschlusskontakte der Rückseite können dabei auch als einstückige Kontaktelemente ausgebildet sein.

Vorzugsweise sind die Aderanschlusskontakte der Vorderseite als Schneid-Klemm-Kontakte ausgebildet.

In einer weiteren Ausführungsform sind die Anschlusskontakte der Rückseite ebenfalls als Aderanschlusskontakte ausgebildet. Dabei bezeichnen Aderanschlusskontakte Kontakte, mittels denen einzelne Adern angeschaltet werden, im Gegensatz zu Steckverbindern, mittels derer gleichzeitig vorzugsweise mehrere Adern angeschaltet werden können. Ein solcher Steckverbinder ist beispielsweise ein RJ45-Steckverbinder oder ein Koaxial-Steckverbinder. Die Aderanschlusskontakte sind vorzugsweise Schneid-Klemm-Kontakte oder Wire-Wrap-Kontakte.

In einer weiteren Ausführungsform sind die Anschlusskontakte der Rückseite symmetrisch zu den Seitenflächen des Gehäuses angeordnet. Weiter vorzugsweise ist die Rückseite schmaler als die Vorderseite. Weiter vorzugsweise weist das Gehäuse dabei eine T-Form auf.

In einer weiteren Ausführungsform ist in dem Gehäuse eine Leiterplatte angeordnet, über die die Aderanschlusskontakte der Vorderseite und die Anschlusskontakte der Rückseite elektrisch verbunden sind.

In einer weiteren Ausführungsform ist die Leiterplatte mittig in dem Gehäuse angeordnet. Dadurch können die Kontakte zur Kontaktierung der Leiterplatte ebenfalls mittig angeordnet sein, d.h. diese müssen ausgehend von den Aderanschlusskontakten nicht abgekröpft werden. Dabei liegt die Mittelachse der Aderanschlusskontakte, insbesondere der Schneid-Klemm-Kontakte, auf der Mittelebene der Leiterplatte.

In einer weiteren bevorzugten Ausführungsform sind die Aderanschlusskontakte der Vorderseite und/oder die Anschlusskontakte der Rückseite über Gabelkontakte mit der Leiterplatte verbunden. Dabei können die Aderanschlusskontakte und die Gabelkontakte jeweils als einstückige Kontaktelemente ausgebildet sein, die dann in einem separaten Gehäuse angeordnet sind und einen Leiterplattensteckverbinder bilden. Dabei kann auch vorgesehen sein, dass die Kontaktelemente verliersicher in dem weiteren Gehäuse angeordnet sind. Somit kann der Leiterplattensteckverbinder separat beschaltet werden und der beschaltete Leiterplattensteckverbinder dann auf die Leiterplatte aufgesteckt werden.

In einer weiteren Ausführungsform sind auf der Leiterplatte Funktionselemente angeordnet, die in Schlitzen der Leiterplatte angeordnet sind. Insbesondere bei der mittigen Anordnung der Leiterplatte kann dann die Bauhöhe gleichmäßig über und unter der Leiterplatte verteilt werden. Vorzugsweise ist die Breite des Schlitzes so breit wie möglich, ohne dass unter Berücksichtigung von Fertigungstoleranzen das Funktionselement durchrutschen kann. Vorzugsweise ist die Breite des Schlitzes mindestens 80 % des Durchmessers des Funktionselements, weiter vorzugsweise mindestens 85 %, weiter vorzugsweise mindestens 90 %. Das Funktionselement ist vorzugsweise ein Überspannungsleiter mit Fail-Safe-Kontakt. Dabei ist weiter vorzugsweise der Fail-Safe-Kontakt auf der in die Leiterplatte durchgetauchten Seite des Überspannungsableiters angeordnet, so dass die Bauhöhenverteilung über und unterhalb der Leiterplatte nahezu gleichmäßig ist. Somit kann die Verteilerleiste trotz integrierter Funktionselemente sehr flach ausgebildet werden.

Die Erfindung wird nachfolgend anhand eines bevorzugten Ausführungsbeispiels näher erläutert. Die Fig. zeigen:
- Fig. 1: eine perspektivische Vorderansicht einer Verteilerleiste,
- Fig. 2: eine perspektivische Rückansicht der Verteilerleiste,
- Fig. 3: eine perspektivische Vorderansicht der Verteilerleiste mit teilweise entferntem Gehäuse,
- Fig. 4: eine perspektivische Draufsicht auf eine Leiterplatte mit Überspannungsableitern,

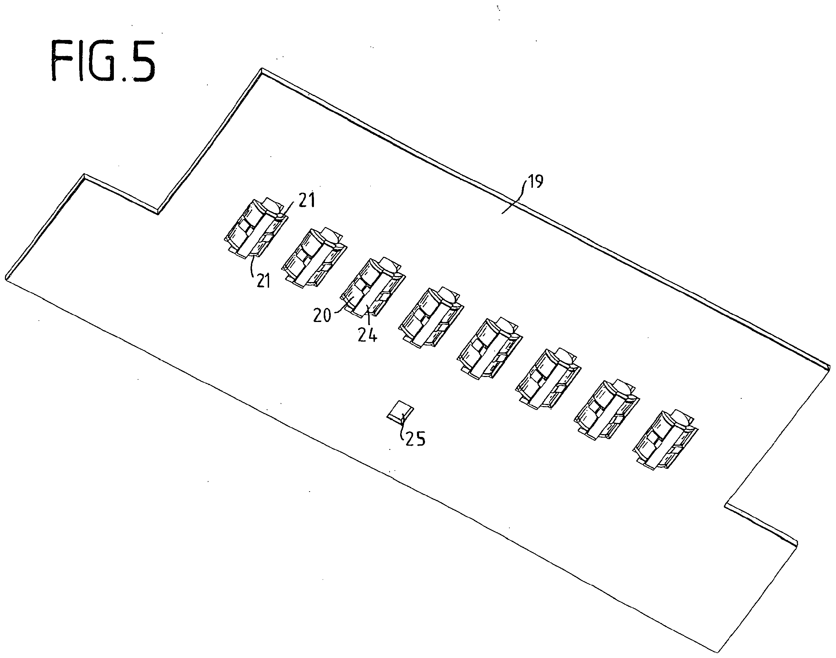

- Fig. 5: eine perspektivische Unteransicht auf eine Leiterplatte mit Überspannungsableitern,
- Fig. 6: eine Seitenansicht einer Leiterplatte mit Überspannungsableitern,
- Fig. 7: eine Vorderansicht einer Leiterplatte mit Überspannungsableitern,
- Fig. 8: eine Schnittdarstellung durch eine Verteilerleiste, wobei der Schnitt durch beide Leiterplattensteckverbinder gelegt ist,
- Fig. 9: eine perspektivische Vorderansicht eines Verteilerblocks mit drei Verteilerleisten und
- Fig. 10: eine perspektivische Vorderansicht eines Verteilerblocks mit einer vollbestückten Montagewanne als Trägersystem.

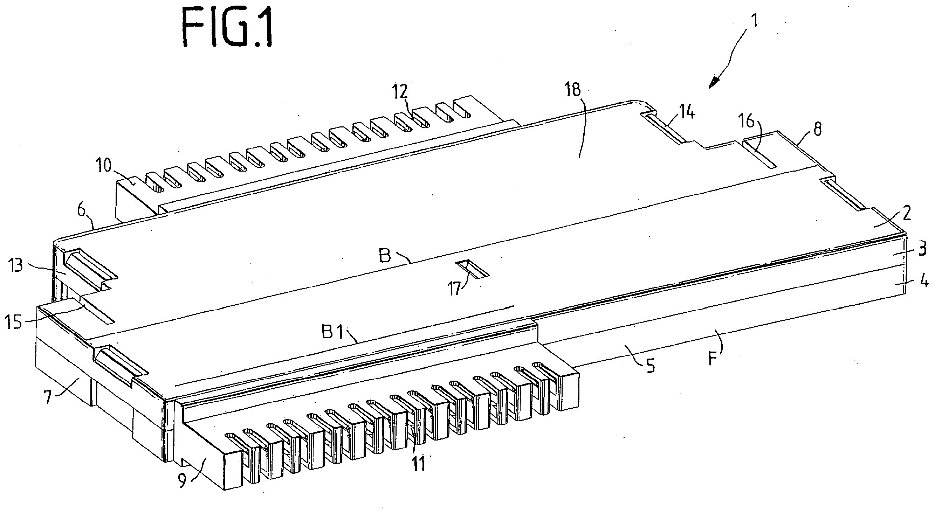

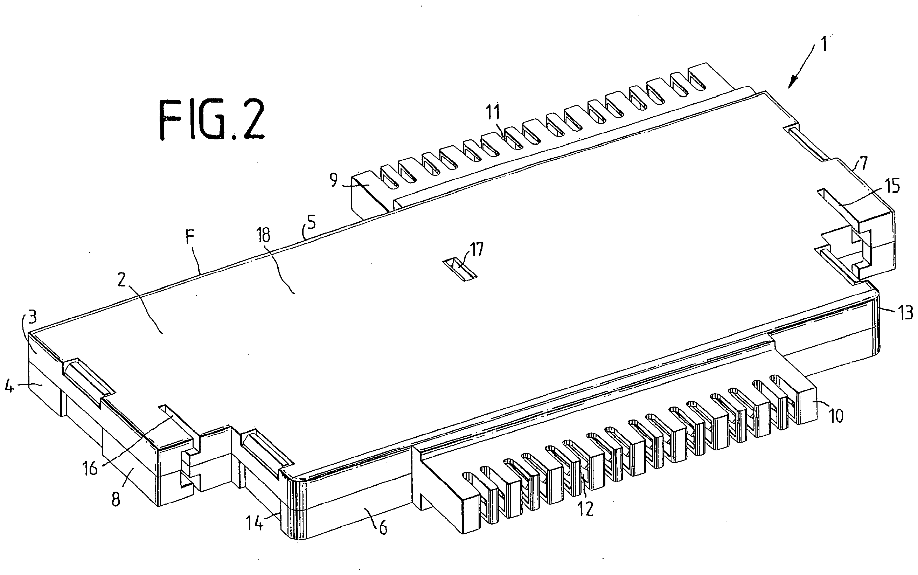

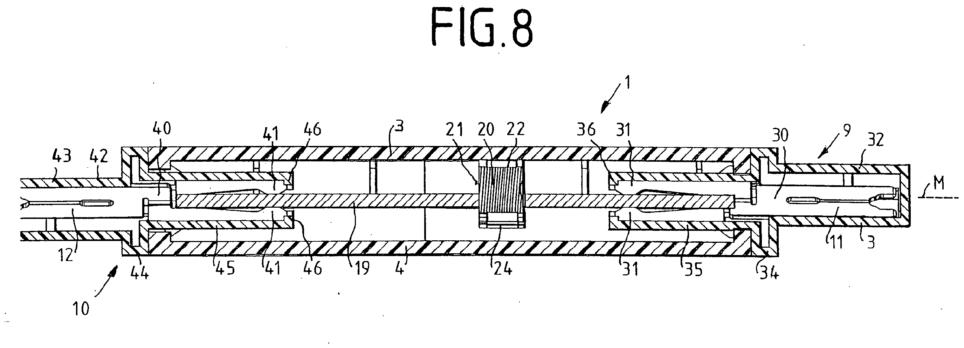

In der Fig. 1 und Fig. 2 ist eine Verteilerleiste 1 dargestellt. Die Verteilerleiste 1 umfasst ein Gehäuse 2, das ein Gehäuseoberteil 3 und ein Gehäuseunterteil 4 aufweist. Die Verteilerleiste 1 weist eine Vorderseite 5, eine Rückseite 6, eine linke Seitenfläche 7 und eine rechte Seitenfläche 8 auf. An der Vorderseite 5 ist ein Leiterplattensteckverbinder 9 angeordnet. Ebenso ist an der Rückseite 6 ein Leiterplattensteckverbinder 10 angeordnet. Die Leiterplattensteckverbinder 9, 10 sind gleich aufgebaut und weisen sechzehn Kontaktelemente 30, 40 (Fig. 8) auf, um jeweils acht Doppeladern anzuschalten. Die Kontaktelemente 30, 40 weisen jeweils zwei Kontakte auf, nämlich einen Aderanschlusskontakt 11, 12 in Form eines Schneid-Klemm-Kontaktes und einen Leiterplattenkontakt 31, 41, mittels dessen der Leiterplattensteckverbinder 9, 10 mit einer innerhalb des Gehäuses 2 angeordneten Leiterplatte 19 elektrisch verbunden wird. Der Leiterplattenkontakt 31, 41 ist vorzugsweise als Gabelkontakt ausgebildet. Die Aderanschlusskontakte 11, 12 sind dabei von der Vorderseite 5 bzw. der Rückseite 6 zugänglich. Der Leiterplattensteckverbinder 9 ist dabei nach links seitlich versetzt angeordnet und schließt nahezu bündig mit der linken Seitenfläche 7 ab. Die Breite B1 des Leiterplattensteckverbinders 9 ist dabei kleiner/gleich der halben Breite B der Vorderseite 5. Die rechte Hälfte der Vorderseite 5 ist somit frei und kann für verschiedenste weitere Funktionen wie beispielsweise Beschriftungen, Signalisierungen, Mess- und/oder Prüfkontakte oder Drahtführungen benutzt werden. Die rechte Hälfte stellt daher einen Freiraum bzw. Funktionsraum F dar. Die Rückseite 6 ist dabei schmaler als die Vorderseite 5, weist also eine geringere Breite B2 auf. Der Leiterplattensteckverbinder 10 ist dabei mittig, d.h. symmetrisch zu den Seitenflächen 7, 8 bzw. den zurückgesetzten Flächen 13, 14 angeordnet. Weiter weist das Gehäuse 2 Schlitze 15, 16 auf, über die die Verteilerleiste 1 auf eine Wanne aufgesteckt werden kann, wobei dabei vorzugsweise gleichzeitige eine elektrische Verbindung zwischen einem im Gehäuse 2 angeordneten Erdkontakt mit der Wanne hergestellt wird. Schließlich ist eine Freimachung 17 auf einer Oberseite 18 des Gehäuses 2 erkennbar.

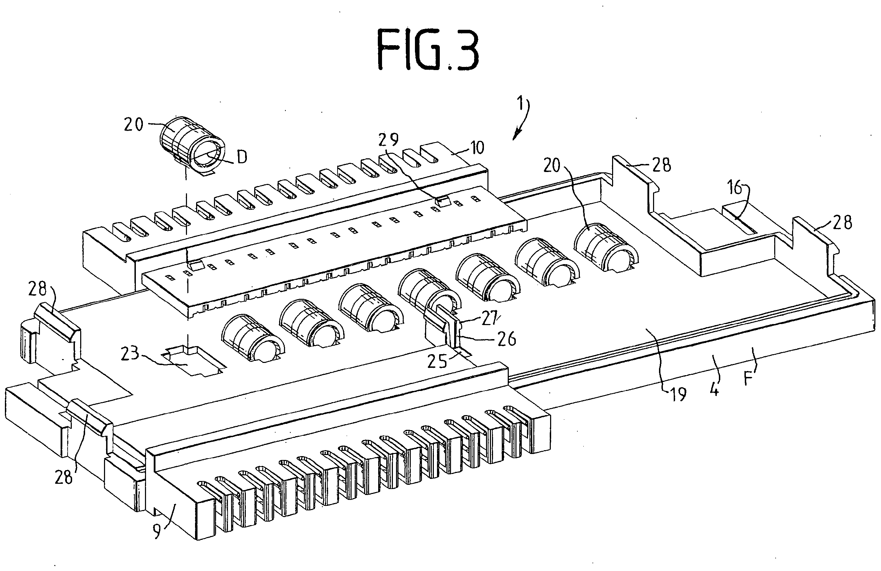

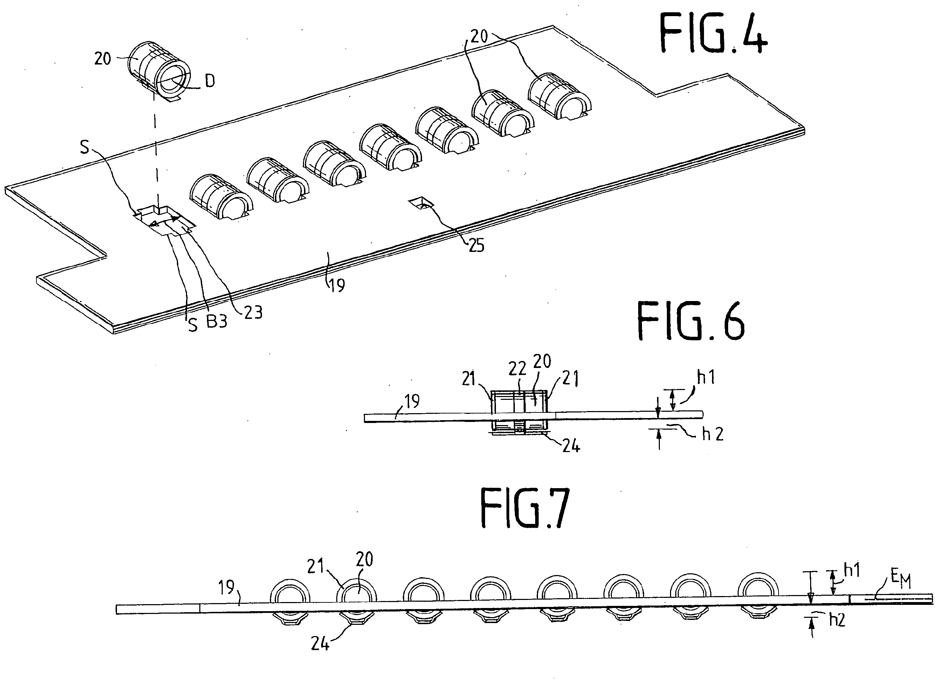

In der Fig. 3 ist die Verteilerleiste 1 ohne Gehäuseoberteil 3 dargestellt, so dass eine innerhalb des Gehäuses 2 angeordnete Leiterplatte 19 erkennbar ist. Auf der Leiterplatte 19 sind acht Überspannungsableiter 20 angeordnet. Der Überspannungsableiter 20 ist zylindrisch aufgebaut und weist zwei äußere Elektroden 21 und eine Mittelelektrode 22 auf. Die Überspannungsableiter 20 sind dabei in Schlitzen 23 der Leiterplatte 19 angeordnet, wobei die Breite B3 der Schlitze 23 etwas kleiner als der Durchmesser D der Überspannungsableiter 20 ist (siehe auch Fig. 4). Die Länge des Schlitzes 23 ist auf die Länge des Überspannungsableiters 20 abgestimmt, wobei in der Mitte der Schlitz etwas länger ist, damit ein auf dem Überspannungsableiter 20 angeordneter Fail-Safe-Kontakt 24 durch den Schlitz 23 durchtauchen kann. Der Schlitz 23 ist dabei derart dimensioniert, dass unter Berücksichtigung der Herstellungstoleranzen für den Überspannungsableiter 20 und den Schlitz 23 sichergestellt ist, dass der Überspannungsableiter 20 nicht durch den Schlitz 23 rutscht. Ziel ist es dabei, die Bauhöhe h1 oberhalb der Leiterplatte 19 und die Bauhöhe h2 unterhalb der Leiterplatte 19 möglichst stark anzunähern, damit die Verteilerleiste insgesamt eine geringe Bauhöhe aufweist (siehe auch Fig. 6 und 7). Beispielsweise beträgt der Durchmesser des Überspannungsableiters 6 mm, wobei die Höhe der Verteilerleiste insgesamt nur 10 mm beträgt. Berücksichtigt man noch den Fail-Safe-Kontakt 24, so ist die Bauhöhe der Verteilerleiste 1 ca. 1,5 x Bauhöhe des Funktionselements (Überspannungsableiter + Fail-Safe-Kontakt).
Die Stirnseiten S des Schlitzes 23 können dabei metallisiert sein, um die äußeren Elektroden 21 zu kontaktieren. Über nicht dargestellte Leiterbahnen können dann die Elektroden 21 mit zwei paarweise zugeordneten Kontakten der Leiterplattensteckverbinder elektrisch verbunden werden. Die Leiterplatte 19 ist T-förmig ausgebildet und weist eine Öffnung 25 auf. Durch die Öffnung 25 ragt eine Fixierungslasche 26 des Gehäuseunterteils 4, die die Leiterplatte 19 fixiert (siehe Fig. 3). Die Fixierungslasche 26 ist vorzugsweise federn ausgebildet und weist Rasthaken 27 auf. Die Fixierungslasche 26 ist dabei vorzugsweise aus einer Freimachung ähnlich der Freimachung 17 herausgeformt. Entsprechend weist auch das Gehäuseoberteil 3 vorzugsweise eine Fixierungslasche auf, die beispielsweise mit der Fixierungslasche 26 verrastet.

Das Gehäuseunterteil 4 weist verschiedene Rastelemente 28 auf, mittels derer das Gehäuseunterteil 4 mit dem Gehäuseoberteil 3 verrastet wird. Ebenso weisen die Leiterplattensteckverbinder 9, 10 Rastelemente 29 auf, mittels derer die Leiterplattensteckverbinder 9, 10 mit dem Gehäuseoberteil 3 und dem Gehäuseunterteil 4 verrastbar sind, wobei in Fig. 3 nur die Rastelemente 30 des Leiterplattensteckverbinders 10 zur Verrastung mit dem Gehäuseoberteil 3 erkennbar sind.

Der Aufbau der Leiterplattensteckverbinder 9, 10 soll nun anhand von Fig. 8 erläutert werden. Der Leiterplattensteckverbinder 9 umfasst sechzehn Kontaktelemente 30, die vorzugsweise als einstückige Stanzbiegeteile ausgebildet sind. Die Kontaktelemente 30 umfassen jeweils den Aderanschlusskontakt 11 in Form eines Schneid-Klemm-Kontakts und einen Leiterplattenkontakt 31 in Form eines Gabelkontakts. Das Gehäuse 32 des Leiterplattensteckverbinders 9 weist einen ersten Abschnitt 33 auf, in dem der Aderanschlusskontakt 11 liegt. An diesen ersten Abschnitt 33 schließt sich ein zweiter Abschnitt 34 an, der etwas breiter ist und eine Anschlagkante am Gehäuseoberteil 3 und Gehäuseunterteil 4 bildet. An diesem zweiten Abschnitt 34 schließt sich ein dritter Abschnitt 35 an, der schmaler als der erste Abschnitt 33 ist und in dem die Leiterplattenkontakte 31 angeordnet sind. An seinem Ende weist der dritte Abschnitt 35 nach innen gerichtete Anschläge 36 für die Gabelkontakte auf, so dass die Kontaktelemente 30 verliersicher in dem Gehäuse 32 angeordnet sind. Somit können die Kontaktelemente 30 bzw. das Gehäuse 32 Anschaltkräfte aufnehmen, die beim Beschalten der Aderanschlusskontakte 11 auftreten. Dabei liegen die Aderanschlusskontakte 11 und die Gabelkontakte in einer Linie. Eine Mittelachse M der Aderanschlusskontakte 11 liegt dabei in einer Mitteleben E_{M} der Leiterplatte 19, wobei die Mittelebene E_{M} in Fig. 7 dargestellt ist. Die Leiterplatte 19 liegt dabei mittig im Gehäuse 2 der Verteilerleiste 1.

Entsprechend ist der zweite Leiterplattensteckverbinder 10 aufgebaut, mit einem Kontaktelement 40 mit einem Aderanschlusskontakt 12 und einem Leiterplattenkontakt 41, einem Gehäuse 42 mit einem ersten Abschnitt 43, einem zweiten Abschnitt 44 und eine dritten Abschnitt 45 mit Anschlägen 46.

Die Überspannungsableiter 20 sind mit ihren Mittelelektroden 22 mit mindestens einer gemeinsamen Masseleitung verbunden. Die Masseleitung kann dabei eine Leiterbahn auf oder in der Leiterplatte 19 oder aber eine separate Sammelerde sein, die auf die Überspannungsableiter 20 aufgeclipst wird. Im Bereich der Schlitze 15, 16 ist dann jeweils ein Erdkontakt angeordnet (nicht dargestellt), über den die Masseleitung bzw. Sammelerde mit einem Trägersystem verbunden wird.

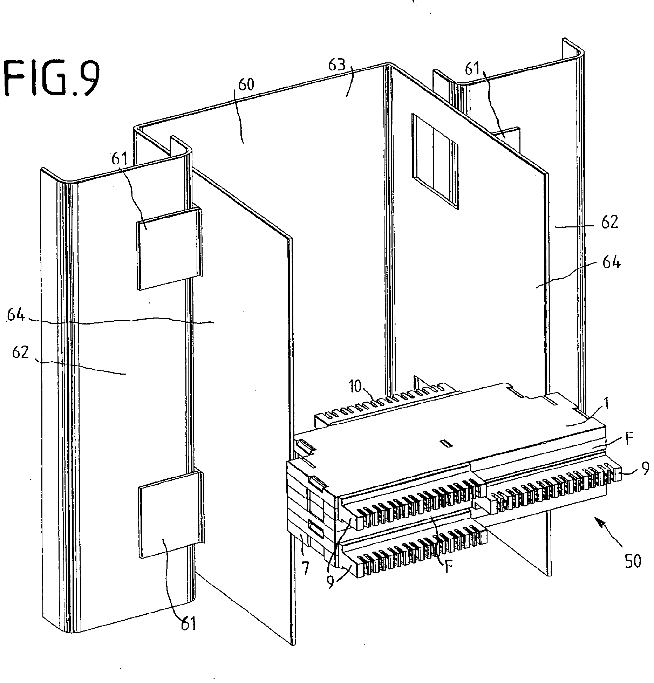

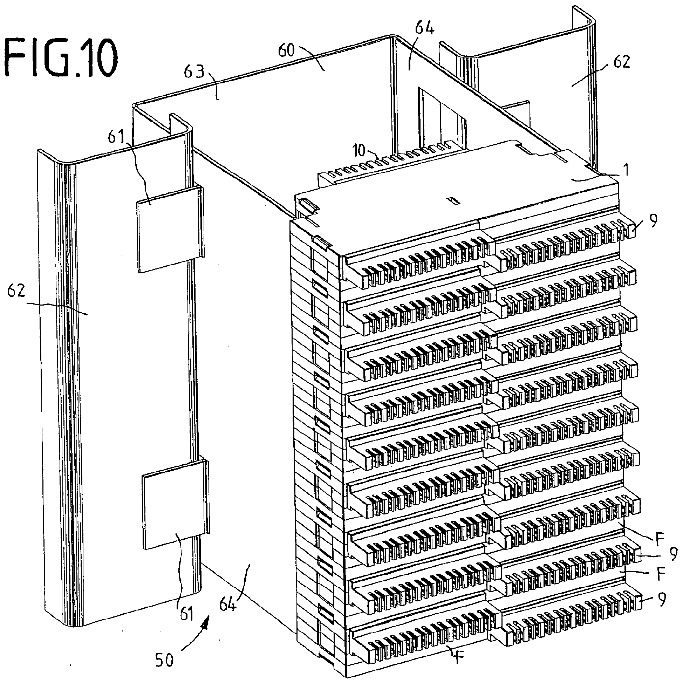

Anhand der Fig. 9 und Fig. 10 wird nun der Aufbau eines Verteilerblocks 50 näher erläutert. Der Verteilerblock 50 besteht aus einem Trägersystem 60, das als im Querschnitt U-förmige Wanne ausgebildet ist, wobei im dargestellten Ausführungsbeispiel die Wanne mittels Befestigungselementen 61 an zwei Buchtenschienen 62 befestigt ist. Die Wanne umfasst eine Bodenplatte 63 und zwei Seitenflächen 64. Dabei werden die Verteilerleisten 1 alternierend links- oder rechtsbündig auf die Seitenflächen 64 der Wanne mittels der Schlitze 15, 16 der Verteilerleisten 1 aufgesteckt. Dabei entspricht die Orientierung der obersten Verteilerleiste 1 in Fig. 9 der Darstellung in Fig. 1, wobei der Leiterplattensteckverbinder 9 linksbündig zur Seitenfläche 64 bzw. einer Seitenfläche 7 des Gehäuses 2 ist. Entsprechend ist die unterste Verteilerleiste 1 ausgebildet. Die mittlere Verteilerleiste 1 ist hingegen derart ausgerichtet, dass der Leiterplattensteckverbinder 9 rechtsbündig zur Seitenfläche 64 angeordnet ist. Hierzu wird beispielsweise die Verteilerleiste einfach um 180° gedreht. Dadurch liegt der Freiraum F der mittleren Verteilerleiste 1 zwischen dem Leiterplattensteckverbinder 9 der obersten Verteilerleiste 1 und dem Leiterplattensteckverbinder 9 der untersten Verteilerleiste 1. Somit können die als Schneid-Klemm-Kontakte ausgebildeten Aderanschlusskontakte 11 mit einem Werkzeug, wie in der EP 0 329 917 A1 beschrieben, beschaltet werden.

Dabei werden die Leiterplattensteckverbinder 10 bzw. deren Aderanschlusskontakte 12 vor dem Aufstecken auf die Seitenflächen 64 beschaltet. Die Leiterplattensteckverbinder 9 können dabei ebenfalls vor dem Aufstecken beschaltet werden, aber auch nach dem Aufstecken.

In der Fig. 10 ist schließlich der vollbestückte Verteilerblock 50 mit achtzehn Verteilerleisten 1 dargestellt, so dass insgesamt 144 Doppeladern je Seite angeschaltet werden können.

### Bezugszeichenliste

- 1: Verteilerleiste
- 2: Gehäuse
- 3: Gehäuseoberteil
- 4: Gehäuseunterteil
- 5: Vorderseite
- 6: Rückseite
- 7: linke Seitenfläche
- 8: rechte Seitenfläche
- 9: Leiterplattensteckverbinder
- 10: Leiterplattensteckverbinder
- 11: Aderanschlusskontakt
- 12: Aderanschlusskontakt
- 13: zurückgesetzte Fläche
- 14: zurückgesetzte Fläche
- 15: Schlitz
- 16: Schlitz
- 17: Freimachung
- 18: Oberseite
- 19: Leiterplatte
- 20: Überspannungsableiter
- 21: Elektrode
- 22: Mittelelektrode
- 23: Schlitz
- 24: Fail-Safe-Kontakt
- 25: Öffnung
- 26: Fixierungslasche
- 27: Rasthaken
- 28: Rastelement
- 29: Rastelement
- 30: Rastelement
- 31: Leiterplattenkontakt
- 32: Gehäuse
- 33: erster Abschnitt
- 34: zweiter Abschnitt
- 35: dritter Abschnitt
- 36: Anschlag
- 40: Kontaktelement
- 41: Leiterplattenkontakt
- 42: Gehäuse
- 43: erster Abschnitt
- 44: zweiter Abschnitt
- 45: dritter Abschnitt
- 46: Anschlag
- 50: Verteilerblock
- 60: Trägersystem
- 61: Befestigungselement
- 62: Buchtenschiene
- 63: Bodenplatte
- 64: Seitenfläche
- B: halbe Breite
- B1: Breite
- B2: Breite
- B3: Breite
- D: Durchmesser
- E_{M}: Mittelebene
- h1: Bauhöhe
- h2: Bauhöhe
- M: Mittelachse
- S: Stirnseite

## Patentansprüche

1. Verteilerleiste (1) für die Telekommunikations- und Datentechnik, umfassend ein Gehäuse (2) und Anschlusskontakte für Adern, wobei die Verteilerleiste (1) eine Vorderseite (5) und eine Rückseite (6) aufweist, wobei Anschlusskontakte sowohl von der Vorderseite (5) als auch von der Rückseite (6) zugänglich sind, wobei die Anschlusskontakte der Vorderseite (5) mit den Anschlusskontakten der Rückseite (6) elektrisch verbunden sind, wobei mindestens die Anschlusskontakte der Vorderseite (5) als Aderanschlusskontakte (11) ausgebildet sind,
**dadurch gekennzeichnet, dass**
die Aderanschlusskontakte (11) der Vorderseite (5) seitlich zu einer Seitenfläche (7, 8) des Gehäuses (2) versetzt angeordnet sind und sich maximal bis zur halben Breite (B) der Vorderseite (5) erstrecken.

2. Verteilerleiste nach Anspruch 1, **dadurch gekennzeichnet, dass** die Aderanschlusskontakte (11) der Vorderseite (5) als Schneid-Klemm-Kontakte ausgebildet sind.

3. Verteilerleiste nach Anspruch 1 oder 2, **dadurch gekennzeichnet, dass** die Anschlusskontakte der Rückseite (6) als Aderanschlusskontakte (12) ausgebildet sind.

4. Verteilerleiste nach einem der vorangegangenen Ansprüche, **dadurch gekennzeichnet, dass** die Anschlusskontakte der Rückseite (6) symmetrisch zu den Seitenflächen (7, 8) des Gehäuses (2) angeordnet sind.

5. Verteilerleiste nach einem der vorangegangenen Ansprüche, **dadurch gekennzeichnet, dass** in dem Gehäuse (2) eine Leiterplatte (19) angeordnet ist, über die die Aderanschlusskontakte (11) der Vorderseite (5) und die Anschlusskontakte der Rückseite (6) elektrisch verbunden sind.

6. Verteilerleiste nach Anspruch 5, **dadurch gekennzeichnet, dass** die Leiterplatte (19) mittig in dem Gehäuse (2) angeordnet ist.

7. Verteilerleiste nach Anspruch 5 oder 6, **dadurch gekennzeichnet, dass** die Aderanschlusskontakte (11) der Vorderseite (5) und/oder die Anschlusskontakte der Rückseite (6) über Gabelkontakte mit der Leiterplatte (19) verbunden sind.

8. Verteilerleiste nach einem der Ansprüche 5 bis 7, **dadurch gekennzeichnete, dass** auf der Leiterplatte (19) Funktionselemente angeordnet sind, die in Schlitzen (23) der Leiterplatte (19) angeordnet sind.

9. Verteilerleiste (1) nach Anspruch 1, **dadurch gekennzeichnet, dass** in dem Gehäuse (2) eine Leiterplatte (19) mit Funktionselementen angeordnet ist, wobei mindestens die Aderanschlusskontakte (11) der Vorderseite (5) Teile von Kontaktelementen (30) eines Leiterplattensteckverbinders (9) sind, wobei die Kotaktelemente (30) jeweils mindestens einen Gabelkontakt aufweisen, wobei die Leiterplatte (19) mittig in dem Gehäuse (2) angeordnet ist, wobei die Funktionselemente in Schlitzen (23) der Leiterplatte (19) angeordnet sind, wobei die Breite (B3) der Schlitze mindestens 80 % des Durchmessers (D) der Funktionselemente beträgt.

10. Verteilerblock, umfassend mindestens zwei Verteilerleisten (1) nach einem der Ansprüche 1 bis 8 und ein Trägersystem (60), wobei die Verteilerleisten (1) an dem Trägersystem (60) befestigt sind, **dadurch gekennzeichnet, dass**
die Verteilerleisten (1) untereinander angeordnet sind, wobei die Aderanschlusskontakte (11) alternierend links- oder rechtsbündig angeordnet sind.

## Claims

1. A distribution strip (1) for telecommunications and data technology, comprising a housing (2) and connection contacts for cores, the distribution strip (1) having a front side (5) and a rear side (6), with connection contacts being accessible both from the front side (5) and from the rear side (6), the connection contacts on the front side (5) being electrically connected to the connection contacts on the rear side (6), at least the connection contacts on the front side (5) being in the form of core connection contacts (11), **characterized in that** the core connection contacts (11) on the front side (5) are arranged laterally offset with respect to a side face (7, 8) of the housing (2) and extend at most as far as half the width (B) of the front side (5).

2. The distribution strip as claimed in claim 1, wherein the core connection contacts (11) on the front side (5) are in the form of insulation displacement contacts.

3. The distribution strip as claimed in claim 1 or 2, wherein the connection contacts on the rear side (6) are in the form of core connection contacts (12).

4. The distribution strip as claimed in one of the preceding claims, wherein the connection contacts on the rear side (6) are arranged symmetrically with respect to the side faces (7, 8) of the housing (2).

5. The distribution strip as claimed in one of the preceding claims, wherein a printed circuit board (19) is arranged in the housing (2), with the core connection contacts (11) on the front side (5) and the connection contacts on the rear side (6) being electrically connected to one another via said printed circuit board.

6. The distribution strip as claimed in claim 5, wherein the printed circuit board (19) is arranged centrally in the housing (2).

7. The distribution strip as claimed in claim 5 or 6, wherein the core connection contacts (11) on the front side (5) and/or the connection contacts on the rear side (6) are connected to the printed circuit board (19) via fork contacts.

8. The distribution strip as claimed in one of claims 5 to 7, wherein functional elements are arranged on the printed circuit board (19), said functional elements being arranged in slots (23) in the printed circuit board (19).

9. The distribution strip (1) as claimed in claim 1, wherein a printed circuit board (19) with functional elements is arranged in the housing (2), at least the core connection contacts (11) on the front side (5) being parts of contact elements (30) of a printed circuit board plug-type connector (9), the contact elements (30) each having at least one fork contact,
wherein the printed circuit board (19) is arranged centrally in the housing (2), the functional elements being arranged in slots (23) in the printed circuit board (19), the width (B3) of the slots being at least 80% of the diameter (D) of the functional elements.

10. A distribution block, comprising at least two distribution strips (1) as claimed in one of claims 1 to 8 and a carrier system (60), the distribution strips (1) being fastened on the carrier system (60), **characterized in that**
the distribution strips (1) are arranged one below the other, the core connection contacts (11) being arranged alternately flush left or flush right.

## Revendications

1. Barrette de répartiteur (1) destinée à une technique de télécommunications et de données, comprenant un boîtier (2) et des contacts de raccordement destinés à des fils, dans laquelle la barrette de répartiteur (1) présente une face avant (5) et une face arrière (6), dans laquelle des contacts de raccordement sont accessibles à la fois depuis la face avant (5) et depuis la face arrière (6), dans laquelle les contacts de raccordement de la face avant (5) sont électriquement reliés aux contacts de raccordement de la face arrière (6), dans laquelle les contacts de raccordement de la face avant (5) sont au moins réalisés sous la forme de contacts de raccordement de fils (11),
**caractérisée en ce que** les contacts de raccordement de fils (11) de la face avant (5) sont agencés de manière décalée latéralement vers une surface latérale (7, 8) du boîtier (2) et s'étendent au maximum jusqu'à la moitié de la largeur (B) de la face avant (5).

2. Barrette de répartiteur selon la revendication 1, **caractérisée en ce que** les contacts de raccordement de fils (11) de la face avant (5) sont réalisés sous la forme de contacts auto-dénudants.

3. Barrette de répartiteur selon la revendication 1 ou 2, **caractérisée en ce que** les contacts de raccordement de la face arrière (6) sont réalisés sous la forme de contacts de raccordement de fils (12).

4. Barrette de répartiteur selon l'une des revendications précédentes, **caractérisée en ce que** les contacts de raccordement de la face arrière (6) sont disposés symétriquement par rapport aux surfaces latérales (7, 8) du boîtier (2).

5. Barrette de répartiteur selon l'une des revendications précédentes, **caractérisée en ce qu'**il est prévu dans le boîtier (2) une carte de circuit imprimé (19) par l'intermédiaire de laquelle les contacts de raccordement de fils (11) la face avant (5) et les contacts de raccordement de la face arrière (6) sont électriquement reliés.

6. Barrette de répartiteur selon la revendication 5, **caractérisée en ce que** la carte de circuit imprimé (19) est disposée au centre du boîtier (2).

7. Barrette de répartiteur selon la revendication 5 ou 6, **caractérisée en ce que** les contacts de raccordement de fils (11) de la face avant (5) et/ou les contacts de raccordement de la face arrière (6) sont reliés à la carte de circuit imprimé (19) par l'intermédiaire de contacts en fourche.

8. Barrette de répartiteur selon l'une des revendications 5 à 7, **caractérisée en ce qu'**il est prévu sur la carte de circuit imprimé (19) des éléments fonctionnels qui sont disposés dans des fentes (23) de la carte de circuit imprimé (19).

9. Barrette de répartiteur (1) selon la revendication 1, **caractérisée en ce qu'**une carte de circuit imprimé (19) comportant des éléments fonctionnels est disposée dans le boîtier (2), dans laquelle au moins les contacts de raccordement de fils (11) de la face avant (5) font partie d'éléments de contact (30) d'un connecteur de carte de circuit imprimé (9), dans laquelle les éléments de contact (30) comportent respectivement au moins un contact en fourche, dans laquelle la carte de circuit imprimé (19) est disposée au centre du boîtier (2), dans laquelle les éléments fonctionnels sont disposés dans des fentes (23) de la carte de circuit imprimé (19), dans laquelle la largeur (B3) de la fente est égale à au moins 80 % du diamètre (D) des éléments fonctionnels.

10. Bloc répartiteur, comprenant au moins deux barrettes de répartiteur (1) selon l'une des revendications 1 à 8 et un système de support (60) dans lequel les barrettes de répartiteur (1) sont fixées au système de support (60),
**caractérisé en ce que** les barrettes de répartiteur (1) sont disposées les unes en dessous des autres, dans lequel les contacts de raccordement de fils (11) sont disposés en alternance de manière alignée à gauche ou à droite.
